# EUROPÄISCHE PATENTSCHRIFT

(11) **EP 3 071 799 B1**
(45) Veröffentlichungstag und Bekanntmachung des Hinweises auf die Patenterteilung: **09.09.2020**
(21) Anmeldenummer: 14808570.7
(22) Anmeldetag: 28.11.2014
(51) Int. Cl.: F01D 25/02, F02C 9/20, F02C 9/28

(54) **BESTIMMUNGSVERFAHREN UND GASTURBINE**
DETERMINATION METHOD AND GAS TURBINE
PROCÉDÉ D'ANALYSE ET TURBINE À GAZ

(30) Priorität: 03.01.2014 EP 14150126
(43) Veröffentlichungstag der Anmeldung: 28.09.2016
(73) Patentinhaber: Siemens Aktiengesellschaft, 80333 München (DE)
(72) Erfinder: BRAUN, Stefan, 47506 Neukirchen-Vluyn (DE); EISFELD, Tjark, 40882 Mettmann (DE); LINK, Marco, 45475 Mülheim (DE); WALTKE, Ulrich, 45468 Mülheim an der Ruhr (DE)
(86) Internationale Anmeldenummer: PCT/EP2014/075961
(87) Internationale Veröffentlichungsnummer: WO 2015/101450

(56) Entgegenhaltungen:
- WO-A2-2010/020595
- DE-A1-102004 025 628
- JP-A- 2011 032 869
- US-A- 3 284 003

## Beschreibung

Die vorliegende Erfindung betrifft eine Gasturbine sowie ein Bestimmungsverfahren zur Bestimmung eines Endwinkels von zwischen einem Anfangswinkel und dem Endwinkel verstellbaren Leitschaufeln einer Leitschaufelreihe eines Verdichters der Gasturbine zur Verhinderung einer Eisbildung in dem Verdichter.

Es ist im Stand der Technik bekannt, bei Gasturbinen im Teillastbetrieb den vom Verdichter angesaugten Luftmassenstrom durch eine variable Anstellung der Verdichtervorleitschaufeln anzupassen. Dadurch kann bei einer gegebenen maximalen Abgastemperatur ein größtmöglicher Wirkungsgrad erzielt werden. Der zulässige Endwinkel der variablen Verdichtervorleitschaufeln ist dabei unter anderem durch eine Abkühlung der Ansaugluft im Bereich der Vorleitschaufelreihe und/oder der ersten Verdichterlaufschaufelreihe und der damit verbundenen Vereisungsgefahr limitiert. In Abhängigkeit der Feuchte der Ansaugluft kann es durch die Beschleunigung der Strömung stromabwärts der Vorleitschaufelreihe, was zur Abkühlung der Strömung führt, zu einer Vereisung im Verdichter und damit zu einer Beeinträchtigung der Maschinenintegrität und gegebenenfalls zu Maschinenschäden kommen.

Im Stand der Technik ist es üblich den Endwinkel für angenommene Werte der Prozessparameter vorab starr festzulegen. Der Fahrbereich der Gasturbine ist dadurch nicht in jeder Situation voll ausgeschöpft.

Eine variable Einstellung schlägt die JP 2011032869 A vor, welche lehrt, die Einstellung anhand der aktuellen Verdichter-Eintrittstemperatur und der Luftfeuchte vorzunehmen. Die Einstellung auf dieser Grundlage erfordert jedoch die berechnungstechnische Bestimmung eines eigenen Kennfelds, welches mitunter unerwünscht großen technischen Aufwand darstellt und möglicherweise zusätzliche Betriebsmessstätten erfordert.

Weiterhin ist aus der DE 10 2004 025628 A1 ein Verfahren bekannt, bei dem ein Endwinkel in Abhängigkeit vom Betriebszustand festgelegt wird bekannt. Hier wird vorgeschlagen eine aerodynamische Drehzahl zu ermitteln, auf dessen Grundlage der Endwinkel festgelegt wird.

Der vorliegenden Erfindung liegt die Aufgabe zugrunde, diese Nachteile zu beheben und ein einfaches Bestimmungsverfahren zur variablen Bestimmung des Endwinkels sowie eine Gasturbine zur Ausübung dieses Bestimmungsverfahrens bereitzustellen.

Gelöst wird diese Aufgabe mit einem Bestimmungsverfahren nach Anspruch 1 sowie einer Gasturbine nach Anspruch 5. Vorteilhafte Weiterbildungen der Erfindung sind in den Unteransprüchen angegeben und in der Beschreibung beschrieben.

Bei dem erfindungsgemäßen Bestimmungsverfahren wird zur Bestimmung eines Endwinkels von zwischen einem Anfangswinkel und dem Endwinkel verstellbaren Leitschaufeln einer stromaufwärts einer hinteren Lauf- oder Leitschaufelreihe angeordneten vorderen Leitschaufelreihe eines Verdichters einer Gasturbine zur Verhinderung einer Eisbildung in dem Verdichter während des Betriebs der Gasturbine in einer Parameterermittlung ein aktueller Wert zumindest eines Prozessparameters ermittelt und anschließend in einer Endwinkelfestlegung der Endwinkel in Abhängigkeit des Wertes festgelegt, wobei als Prozessparameter eine aerodynamische Drehzahl ermittelt wird, in dessen Abhängigkeit der Wert des Endwinkels (E) festgelegt wird.

Mit dieser Anordnung ist es vorteilhaft ermöglicht, den Fahrbereich der Gasturbine zu erweitern und damit deren Einsatzmöglichkeiten und Effizienz zu vergrößern. Statt wie, etwa aus dem Stand der Technik bekannt, einen starr festgelegten Endwinkel zu verwenden, kann der Endwinkel auf die aktuell herrschenden Bedingungen angepasst werden.

Die aerodynamische Drehzahl wird zudem während des Betriebs der Gasturbine zu deren Steuerung beziehungsweise Regelung ohnehin ermittelt. Die Verwendung dieser Größe zur variablen Festlegung des Endwinkels kann dadurch leicht vorgenommen werden, indem etwa einem Satz an erreichbaren aerodynamischen Drehzahlen ein entsprechender Satz an geeigneten Endwinkeln zugeordnet wurde und je nach vorherrschender aerodynamischer Drehzahl ein geeigneter, aktueller Wert eines Endwinkels ausgewählt wird. Zudem sind keine zusätzlichen Betriebsmessstätten nötig. Die aerodynamische Drehzahl, welche auch als reduzierte Drehzahl bekannt ist, ergibt sich aus der mechanischen Drehzahl des Rotors durch Korrektur mit der Eintrittstemperatur.

Eine Veränderung der mechanischen Drehzahl, und folglich auch der aerodynamischen Drehzahl führt bei einer Gasturbine mitunter auch zu einer Änderung des angesaugten und geförderten Massenstromes. Dieser wiederum hat Einfluss auf die Strömungsgeschwindigkeiten innerhalb des Verdichters im Bereich der Beschaufelung. Je nach Strömungsgeschwindigkeiten bildet sich eine Temperaturverteilung in dem Verdichter aus, welche aufgrund der örtlich resultierenden statischen Temperaturen eine Eisbildung ermöglichen kann oder nicht. Insbesondere für Startvorgänge bei gewöhnlichen Gasturbinen, oder bei Netzstörungen von netzsynchronen Verdichtern und bei drehzahlvariablen Verdichtern ist eine Einbeziehung der tatsächlichen Drehzahl vorteilhaft.

Erfindungsgemäß ist vorgesehen, dass das Bestimmungsverfahrens den Wert einer Temperatur ermittelt, wobei eine Oberflächentemperatur an der hinteren Lauf- oder Leitschaufelreihe ermittelt wird.

Die Temperatur ist ein wesentlicher Parameter, der Einfluss auf die Eisbildung hat. Durch die Abhängigkeit des Endwinkels von der Temperatur lässt sich eine Eisbildung leicht vermeiden. Temperaturen sind einfach und kostengünstig zu messen. Das erfindungsgemäße Bestimmungsverfahren ist dadurch einfach zu implementieren.

Dabei ist es für die Erfindung wesentlich, dass der Endwinkel in der Weise festgelegt wird, dass die Oberflächentemperatur oberhalb von 0°C bleibt.

Damit ist eine Eisbildung verhindert und der Verdichter wird vor Beschädigungen durch Eis geschützt.

In einer vorteilhaften Ausführung des erfindungsgemäßen Bestimmungsverfahrens wird als weiterer der Wert einer weiteren Temperatur ermittelt. Dabei kann als Temperatur eine Lufttemperatur einer Umgebung der Gasturbine ermittelt werden.

In einer weiteren vorteilhaften Ausführung des erfindungsgemäßen Bestimmungsverfahrens wird der Wert einer Luftfeuchtigkeit beziehungsweise einer relativen Luftfeuchtigkeit ermittelt.

Die Luftfeuchtigkeit beziehungsweise die relative Luftfeuchtigkeit ist ein wesentlicher Parameter, der Einfluss auf die Eisbildung hat. Durch die Abhängigkeit des Endwinkels von der Luftfeuchtigkeit beziehungsweise der relativen Luftfeuchtigkeit lässt sich eine Eisbildung leicht vermeiden.

In einer weiteren vorteilhaften Ausführung des erfindungsgemäßen Bestimmungsverfahrens wird die relative Luftfeuchtigkeit stromabwärts der vorderen Leitschaufelreihe und stromaufwärts der hinteren Leitschaufelreihe ermittelt.

Dieses ist, durch die starke Beschleunigung der Luftströmung, der kälteste Ort innerhalb des Verdichters während des Betriebs der Gasturbine. Das Potenzial der Luft, Feuchtigkeit aufzunehmen, ist an diesem Ort am geringsten und die relative Luftfeuchtigkeit am größten. Durch die Ermittlung am kältesten Ort ist sichergestellt, dass die kälteste Temperatur in der Maschine berücksichtigt wird.

Die erfindungsgemäße Gasturbine umfasst einen Verdichter. Dieser weist eine vordere Leitschaufelreihe und stromabwärts der vorderen Leitschaufelreihe angeordnet eine hintere Lauf- oder Leitschaufelreihe auf. Die vordere Leitschaufelreihe umfasst Leitschaufeln, die zwischen einem Anfangswinkel und einem Endwinkel verstellbar sind. Die erfindungsgemäße Gasturbine verfügt zudem über zumindest eine Betriebsmessstelle und eine mit der Betriebsmessstelle datenleitend verbundene Auswerteeinheit. Die Auswerteeinheit ist ausgebildet, das erfindungsgemäße Bestimmungsverfahren durchzuführen.

Die Gasturbine kann somit die Vorteile des erfindungsgemäßen Bestimmungsverfahrens nutzen und weist einen vergrößerten Fahrbereich auf.

Ausführungsbeispiele der Erfindung werden anhand der Zeichnungen und der nachfolgenden Beschreibung näher erläutert.

Es zeigen:
- Figur 1: eine erfindungsgemäße Gasturbine,
- Figur 2: ein erfindungsgemäßes Bestimmungsverfahren,
- Figur 3: eine Parameterermittlung des Bestimmungsverfahrens und
- Figur 4: ein Diagramm beispielhafter Endwinkel.

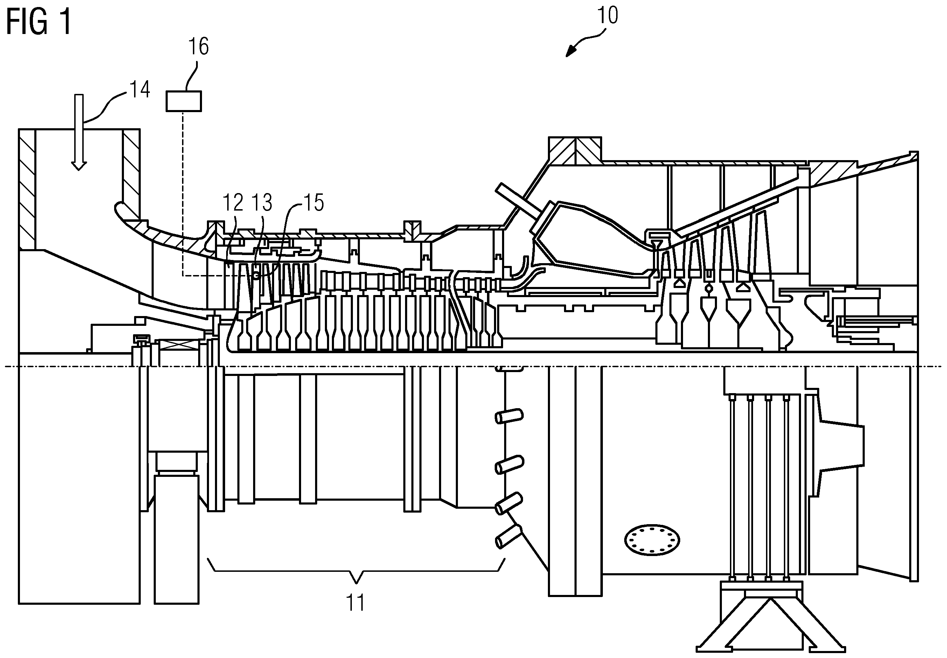

In der Figur 1 ist beispielhaft eine erfindungsgemäße Gasturbine 10 in einer Schnittdarstellung skizziert. Die Gasturbine 10 umfasst einen Verdichter 11, in dem ein angesaugter Luftmassenstrom 14 verdichtet wird. Der Verdichter 11 weist, wie im Stand der Technik üblich, Laufschaufelreihen und Leitschaufelreihen auf.

In der erfindungsgemäßen Gasturbine 10 umfasst der Verdichter 11 eine vordere Leitschaufelreihe 12 und eine hintere Leitschaufelreihe 13. Die vordere Leitschaufelreihe 12 ist stromaufwärts der hinteren Leitschaufelreihe 13 angeordnet und die hintere Leitschaufelreihe 13 ist stromabwärts der vorderen Leitschaufelreihe 12 angeordnet. Dabei ist die vordere Leitschaufelreihe 12 bevorzugt eine sogenannte Vorleitschaufelreihe 12 und die hintere Leitschaufelreihe 13 ist die stromabwärts nächstfolgende sogenannte Erste Leitschaufelreihe 13. In der Weise ist es in der Figur 1 dargestellt. Dazwischen ist eine Laufschaufelreihe dargestellt.

Die vordere Leitschaufelreihe 12 weist verstellbare Leitschaufeln auf, so wie sie aus dem Stand der Technik bekannt sind. Die Leitschaufeln der hinteren Leitschaufelreihe 13 können ebenfalls verstellbar sein. Die Leitschaufeln der vorderen Leitschaufelreihe 12 sind in einem Bereich zwischen einem Anfangswinkel und einem Endwinkel E verstellbar. Mit einer Verstellung der Leitschaufeln wird der Luftmassenstrom 14, der durch die Gasturbine 10 strömt, reguliert. Der Anfangswinkel markiert die Grundstellung der Leitschaufeln, in der der größtmögliche Luftmassenstrom strömen kann. Mit Verstellen der Leitschaufeln verringert sich der Luftmassenstrom, bis mit Erreichen des Endwinkels E der Luftmassenstrom 14 minimiert ist. Je weiter entfernt der Endwinkel E vom Anfangswinkel ist, umso größer ist der Verstellbereich der Leitschaufeln.

Der Endwinkel E ist bei der erfindungsgemäßen Gasturbine 10 variabel bestimmbar. Dazu weist die Gasturbine 10 eine Auswerteeinheit 16 und eine mit der Auswerteeinheit 16 datenleitend verbundene Betriebsmessstelle 15 auf. Die Betriebsmessstelle 15 ist ausgebildet, aktuelle Werte zumindest eines Prozessparameters zu messen. Es ist auch denkbar, dass die Gasturbine 10 mehrere Betriebsmessstellen 15 zur Messung unterschiedlicher Prozessparameter aufweist. Die Betriebsmessstelle 15 ist eine Messstelle für eine Temperatur T und/oder für eine absolute Luftfeuchtigkeit H beziehungsweise für eine relative Luftfeuchtigkeit h. Zudem kann die Betriebsmessstelle 15 eine Messstelle für eine mechanische Drehzahl der Gasturbine 10 sein. Die zumindest eine Betriebsmessstelle 15 kann innerhalb der Gasturbine 10 oder außerhalb in der Umgebung der Gasturbine 10 angeordnet sein.

In der gezeigten Ausgestaltung ist die Betriebsmessstelle 15 innerhalb der Gasturbine 10 an der hinteren Leitschaufelreihe 13 angeordnet und dazu ausgebildet, die Temperatur T der Oberfläche der Leitschaufeln der hinteren Leitschaufelreihe 13 zu messen. Die mit der Betriebsmessstelle 15 verbundene Auswerteeinheit 16 bestimmt in dem erfindungsgemäßen Bestimmungsverfahren 20 den Endwinkel E.

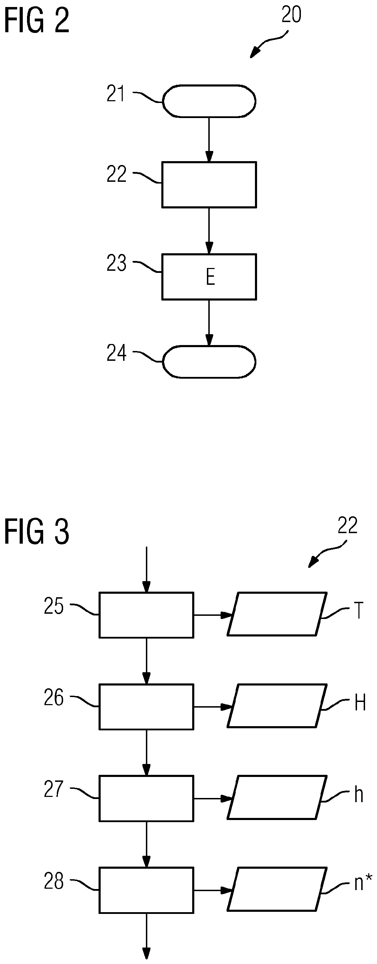

Das erfindungsgemäße Bestimmungsverfahren 20 ist beispielhaft in der Figur 2 in einem Diagramm von einem Start 21 bis zu einem Ende 24 dargestellt. Um eine Eisbildung im Verdichter 11 zu verhindern, wird erfindungsgemäß während des Betriebs der Gasturbine 10 in einer Parameterermittlung 22 ein aktueller Wert zumindest eines Prozessparameters ermittelt. Anschließend wird in einer Endwinkelfestlegung 23 der Endwinkel E in Abhängigkeit dieses Wertes festgelegt.

In der Parameterermittlung 22 kann der aktuelle Wert innerhalb oder auch außerhalb der Gasturbine detektiert werden.

Die Endwinkelfestlegung 23 kann entweder rechnerisch durch Verwendung einer hinterlegten Formel, bei der der Endwinkel E eine Funktion des ermittelten Parameters ist, oder durch Zuweisung eines Endwinkels aus einer hinterlegten Tabelle, bei der für verschiedene Werte des Parameters verschiedene Endwinkel E vordefiniert sind, erfolgen. Der Endwinkel E ist bei identischen Prozessparametern bei verschiedenen Gasturbinentypen unterschiedlich. So muss die Endwinkelfestlegung 23 für jeden Gasturbinentyp individuell erfolgen.

In der Figur 3 ist die Parameterermittlung 22 in einer beispielhaften Ausführung in einem Diagramm dargestellt. In der gezeigten Variante werden von vier verschiedenen Parametern Werte ermittelt. Erfindungsgemäß ist es zumindest einer.

In einer Temperaturermittlung 25 wird der Wert der Temperatur T ermittelt. In einer Luftfeuchtigkeitsermittlung 26 wird der Wert der Luftfeuchtigkeit H ermittelt. In einer Relative-Luftfeuchtigkeitsermittlung 27 wird der Wert der relativen Luftfeuchtigkeit h ermittelt. Und in einer Aerodynamische-Drehzahlermittlung 28 wird der Wert einer aerodynamischen Drehzahl n* ermittelt.

Die Temperaturermittlung 25 kann innerhalb oder außerhalb der Gasturbine 10 erfolgen. Als Temperatur T kann eine Lufttemperatur einer Umgebung der Gasturbine 10 und/oder eine Lufttemperatur des Luftmassenstroms 14 oder auch eine Oberflächentemperatur an einer Materialoberfläche im Inneren der Gasturbine, insbesondere eine Oberflächentemperatur der hinteren Leitschaufelreihe 13 ermittelt werden. Im Inneren der Gasturbine 10 wird die Lufttemperatur insbesondere stromabwärts der vorderen Leitschaufelreihe 12 und stromaufwärts der hinteren Leitschaufelreihe 13 ermittelt, weil dort der kälteste Ort ist. Der Endwinkel E wird insbesondere in der Weise abhängig von der Temperatur T gewählt, dass die Temperatur T, insbesondere die Oberflächentemperatur der hinteren Leitschaufelreihe 13, oberhalb von 0°C bleibt.

Der Ort, an dem die Oberflächentemperatur der Leitschaufel ermittelt wird, liegt insbesondere an einer Schaufelvorderkante, insbesondere an einem äußeren Bereich der Schaufelvorderkante, insbesondere auf etwa einem Viertel der Höhe der Leitschaufel radial in Richtung der Rotationsachse betrachtet. An dieser Stelle wird der kälteste Punkt der Oberfläche Leitschaufel erwartet. Idealerweise wird der Ort, an dem die Oberflächentemperatur der Leitschaufel ermittelt wird, für jede Gasturbine und insbesondere jede Betriebsweise individuell ermittelt. Die Oberflächentemperatur kann dabei auch berührungslos ermittelt werden.

Die Luftfeuchtigkeitsermittlung 26 sowie auch die Relative-Luftfeuchtigkeitsermittlung 27 können ebenfalls innerhalb oder außerhalb der Gasturbine 10 erfolgen. Die Luftfeuchtigkeit H oder die relative Luftfeuchtigkeit h wird insbesondere innerhalb des Luftmassenstroms 14 ermittelt. Insbesondere wird die relative Luftfeuchtigkeit h stromabwärts der vorderen Leitschaufelreihe 12 und stromaufwärts der hinteren Leitschaufelreihe 13 ermittelt, weil dort der kälteste Ort ist und bei konstanter Luftfeuchte H somit auch der Ort mit der höchsten relativen Luftfeuchtigkeit h. Der Endwinkel E wird insbesondere in der Weise festgelegt, dass die relative Luftfeuchtigkeit h kleiner als 100% bleibt.

Die Aerodynamische-Drehzahlermittlung 28 erfolgt durch Messung der mechanischen Drehzahl der Gasturbine 10 sowie der Temperatur T. Der Endwinkel E kann dann als Funktion von der aerodynamischen Drehzahl n* gebildet werden, welche durch Korrektur mit einer Eintrittstemperatur aus der mechanischen Drehzahl abgeleitet werden kann. Details hierzu sind im Buch "Stationäre Gasturbinen" (1. Auflage) vom Herausgeber Jörg Seume auf Seite 346 beschrieben.

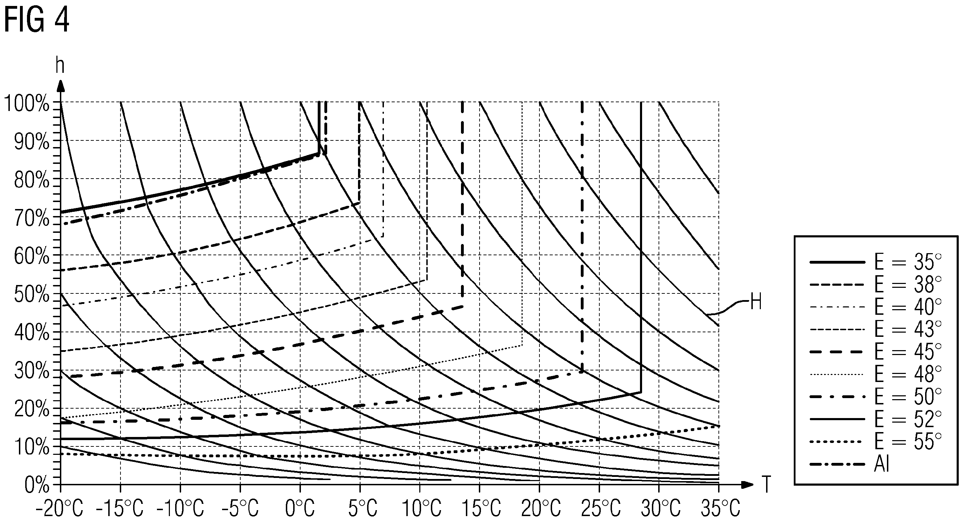

Die Figur 4 zeigt zur Veranschaulichung beispielhaft die Endwinkel E in Abhängigkeit von der Temperatur T und der relativen Luftfeuchtigkeit h für einen bestimmten Gasturbinentyp. Die Werte für die Luftfeuchtigkeit H sind hier beispielhaft auf Konstanten abgetragen. Die Endwinkel E reichen hier von 35°C bis 55°C. Zudem zeigt die Figur 4 die Grenzlinie für ein im Stand der Technik als "Anti Icing" bekanntes Eisschutzverfahren AI. Beim dem Eisschutzverfahren AI wird der Luftmassenstrom 14 insbesondere mit einem weiter stromabwärts entnommenem wärmeren Luftstrom erwärmt. Das erfindungsgemäße Bestimmungsverfahren 20 kann auch während des Eisschutzverfahrens AI oder einer anderen Luftvorwärmung ausgeführt werden.

Die Eisbildung entsteht, wenn sowohl die Temperatur unter 0°C liegt als auch die relative Feuchte auf der betroffenen Schaufel größer als 100% ist. Dies trifft für die Lauf- und die Leitschaufeln zu. Das Einfrieren der Laufschaufel ist aufgrund der Fliehkräfte im Betrieb jedoch unwahrscheinlicher und wird deshalb in der Praxis weniger betrachtet, auch wenn die kälteste Temperatur an der Laufschaufel erwartet wird. Die Messung der tiefsten Temperatur an der Laufschaufel ist grundsätzlich möglich, allerdings schwieriger als an der Leitschaufel durchzuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bestimmungsverfahren (20) zur Bestimmung eines Endwinkels (E) von zwischen einem Anfangswinkel und dem Endwinkel (E) verstellbaren Leitschaufeln einer stromaufwärts einer hinteren Lauf- oder Leitschaufelreihe (13) angeordneten vorderen Leitschaufelreihe (12) eines Verdichters (12) einer Gasturbine (10) zur Verhinderung einer Eisbildung in dem Verdichter (11), wobei mit Erreichen des Endwinkels (E) der Luftmassenstrom minimiert ist,
wobei während des Betriebs der Gasturbine (10) in einer Parameterermittlung (22) ein aktueller Wert zumindest eines Prozessparameters ermittelt und anschließend in einer Endwinkelfestlegung (23) der Endwinkel (E) in Abhängigkeit des Wertes festgelegt wird,
wobei als Wert eine aerodynamische Drehzahl (n*) ermittelt wird,
**dadurch gekennzeichnet,**
**dass** als Wert eine Oberflächentemperatur an der hinteren Lauf- oder Leitschaufelreihe (13) ermittelt wird, wobei der Endwinkel (E) in der Weise festgelegt wird, dass die Oberflächentemperatur an der hinteren Lauf- oder Leitschaufelreihe (13) oberhalb von 0°C bleibt.

2. Bestimmungsverfahren (20) nach Anspruch 1,
wobei als Wert eine Lufttemperatur einer Umgebung der Gasturbine (10) ermittelt wird.

3. Bestimmungsverfahren (20) nach Anspruch 1 oder 2,
wobei der Wert einer Luftfeuchtigkeit (H) ermittelt wird.

4. Bestimmungsverfahren (20) nach einem der Ansprüche 1 bis 3,
wobei der Wert einer relativen Luftfeuchtigkeit (h) ermittelt wird.

5. Gasturbine (10) mit einem Verdichter (11),
der eine vordere Leitschaufelreihe (12) mit zwischen einem Anfangswinkel und einem Endwinkel (E) verstellbaren Leitschaufeln und stromabwärts der vorderen Leitschaufelreihe (12) angeordnet eine hintere Leitschaufelreihe (13) aufweist,
zumindest einer Betriebsmessstelle (15) und einer mit der Betriebsmessstelle (15) datenleitend verbundenen Auswerteeinheit (16),
die ausgebildet ist, ein Bestimmungsverfahren nach einem der Ansprüche 1 bis 4 durchzuführen.

## Claims

1. Method of determination (20) for determining a final angle (E) of guide vanes of a front row of guide vanes (12), arranged upstream of a rear row of rotor blades or guide vanes (13), of a compressor (12) of a gas turbine (10) that are adjustable between an initial angle and the final angle (E) for the prevention of ice formation in the compressor (11), the air mass flow being minimized when the final angle (E) is reached,
a current value of at least one process parameter being ascertained during the operation of the gas turbine (10) in a parameter ascertaining step (22), and subsequently, in dependence on the value, the final angle (E) being fixed in a final-angle fixing step (23),
an aerodynamic speed (n*) being ascertained as the value, **characterized in that**
a surface temperature at the rear row of rotor blades or guide vanes (13) is ascertained as the value,
the final angle (E) being fixed in such a way that the surface temperature at the rear row of rotor blades or guide vanes (13) remains above 0°C.

2. Method of determination (20) according to Claim 1,
an air temperature of an area surrounding the gas turbine (10) being ascertained as the value.

3. Method of determination (20) according to Claim 1 or 2,
the value of an atmospheric humidity (H) being ascertained.

4. Method of determination (20) according to one of Claims 1 to 3,
the value of a relative atmospheric humidity (h) being ascertained.

5. Gas turbine (10) with a compressor (11),
which has a front row of guide vanes (12) comprising guide vanes that are adjustable between an initial angle and a final angle (E) and, arranged downstream of the front row of guide vanes (12), a rear row of guide vanes (13),
at least one operational measurement point (15) and an evaluation unit (16) connected in a data-conducting manner to the operational measurement point (15),
which is designed to carry out a method of determination according to one of Claims 1 to 4.

## Revendications

1. Procédé (20) de détermination pour déterminer un angle (E) final d'aubes directrices réglables entre un angle initial et un angle (E) final d'une rangée (12) antérieure d'aubes directrices, disposée en amont d'une rangée (13) postérieure d'aubes mobiles ou directrices d'un compresseur (12) d'une turbine (10) à gaz, pour empêcher un givrage dans le compresseur (11), dans lequel le courant massique d'air est minimisé lorsque l'angle (E) final est atteint, dans lequel, pendant le fonctionnement de la turbine (10) à gaz, on détermine, dans une détermination (22) de paramètre, une valeur en cours d'au moins un paramètre de processus et ensuite, dans une fixation (23) d'angle final, on fixe l'angle (E) final en fonction de la valeur,
dans lequel on détermine comme valeur une vitesse (n*) de rotation aérodynamique,
**caractérisé**
**en ce que** l'on détermine comme valeur une température de surface sur la rangée (13) postérieure d'aubes mobiles ou directrices, l'angle (E) final étant fixé de manière à ce que la température de surface sur la rangée (13) postérieure d'aubes mobiles ou directrices reste au-dessus de 0°C.

2. Procédé (20) de détermination suivant la revendication 1,
dans lequel on détermine comme valeur une température de l'air d'une atmosphère ambiante de la turbine (10) à gaz.

3. Procédé (20) de détermination suivant la revendication 1 ou 2,
dans lequel on détermine la valeur d'une humidité (H) de l'air.

4. Procédé (20) de détermination suivant l'une des revendications 1 à 3,
dans lequel on détermine la valeur d'une humidité (H) relative de l'air.

5. Turbine (10) à gaz comprenant un compresseur (11),
qui a une rangée (12) antérieure d'aubes directrices ayant des aubes directrices réglables entre un angle initial et un angle (E) final et une rangée (13) postérieure d'aubes directrices disposée en aval de la rangée (12) antérieure d'aubes directrices,
au moins un point (15) de mesure de fonctionnement et une unité (16) d'exploitation reliée en transmission de données au point (15) de mesure de fonctionnement,
qui est constituée pour effectuer un procédé de détermination suivant l'une des revendications 1 à 4.
